# EUROPÄISCHE PATENTSCHRIFT

(11) **EP 1 370 433 B1**
(45) Veröffentlichungstag und Bekanntmachung des Hinweises auf die Patenterteilung: **27.10.2004**
(21) Anmeldenummer: 01971970.7
(22) Anmeldetag: 28.08.2001
(51) Int. Cl.: B60G 9/02, B60G 11/10

(54) **ACHSE FÜR FAHRZEUGE, INSBESONDERE NUTZFAHRZEUGE**
AXLE FOR VEHICLES, ESPECIALLY COMMERCIAL VEHICLES
ESSIEU POUR VEHICULES, EN PARTICULIER VEHICULES UTILITAIRES

(30) Priorität: 06.09.2000 DE 10043802
(43) Veröffentlichungstag der Anmeldung: 17.12.2003
(73) Patentinhaber: DaimlerChrysler AG, 70567 Stuttgart (DE)
(72) Erfinder: GABELLA, Giovanni, 71642 Ludwigsburg (DE); NIEBAUER, Günter, 73207 Plochingen (DE)
(86) Internationale Anmeldenummer: PCT/EP2001/009869
(87) Internationale Veröffentlichungsnummer: WO 2002/020290

(56) Entgegenhaltungen:
- US-A- 3 901 494
- US-A- 3 913 937
- US-A- 5 470 096
- US-A- 5 979 920

## Beschreibung

Die Erfindung betrifft eine Achse für Fahrzeuge, insbesondere Nutzfahrzeuge gemäß dem Oberbegriff des Anspruches 1.

Achsen der vorgenannten Art sind beispielsweise aus der DE 297 13 996 U1 oder der US 5 979 902 A bekannt und umfassen als der Achsführung und/oder Achsabstützung zugehörige Funktionselemente Tragarme, die am einen Ende am Fahrzeugaufbau schwenkbar befestigt sind und am in Längsrichtung des Fahrzeuges gegenüberliegenden Ende die Abstützung für eine Luftfeder bilden. Diesen Funktionselementen sind am Achskörper Gegenelemente zugeordnet, die Halterungsteile in Form von Flanschplatten umfassen, die auf ihren einander zugewandten und gegen den Achskörper gerichteten Flächen mit zum Achskörper formschlüssigen Führungen versehen sind, und auf deren einer, ebenfalls formschlüssig gesichert, auf der vom Achskörper abgewandten Seite der Tragarm aufsitzt, wobei der Tragarm und die Flanschplatten über Federbriden verspannt sind, die als zu einer die Achsmittellinie enthaltenden Hochebene parallele Bügel gestaltet sind, welche den Tragarm übergreifen und seitlich des Achskörpers die Flanschplatten durchsetzend an ihrem vom Tragarm abgelegenen, unteren Ende über Muttern verspannt sind, so dass eine Befestigungsebene vorgegeben ist. Zur formschlüssigen Zuordnung der Halterungsteile zum als Trag- und/oder Führungskörper dienenden Tragarm dienen Funktionsteile, die zur Befestigungsebene einen vorgegebenen Abstand aufweisen, und somit auch eine vorgegebene Lage des jeweiligen Tragarmes als Funktionselement gegenüber der Befestigungsebene bestimmen.

Der Erfindung liegt die Aufgabe zugrunde, eine Achse der eingangs genannten Art insbesondere dahingehend weiterzubilden, dass ohne Eingriff in ihre Struktur ein Anpassung an unterschiedliche Fahrzeuggegebenheiten hinsichtlich des Abstandes der der Achsführung und/oder Achsabstützung zugehörigen Funktionselemente von der Achsquermittelebene bzw. der Fahrzeuglängsmittelebene möglich ist.

Gemäß der Erfindung wird dies durch die Merkmale des Anspruches 1 erreicht, denen zufolge die achsseitigen Gegenelemente zu den der Achsabstützung zugehörigen Funktionselementen dadurch an verschiedene Abstände der Funktionselemente zur Fahrzeuglängsmittelebene anzupassen sind, dass das jeweils einem Gegenelement zugeordnete Halterungsteil mit seinem Funktionsteil in unterschiedlichen Positionen zum Achskörper und der Befestigungsebene zu positionieren ist, und dies ohne Eingriff in den sonstigen Aufbau.

Hierfür erweist es sich insbesondere als zweckmäßig, den Halterungsteilen, insbesondere in Form von Flanschplatten, gegenüber dem Achskörper eine eigenständige Befestigung zu geben, nämlich als lösbare Befestigung insbesondere in Form einer Schraubverbindung, die in ihrer Zuordnung zum Achskörper die konstruktive Festlegung einer Befestigungsebene ermöglicht, zu der das jeweilige Halterungsteil, bei Versatz des zugeordneten Funktionsteiles gegenüber der Befestigungsebene, so mit dem Achskörper zu verbinden ist, dass sich für das Funktionsteil zur Achsquermittelebene in den verschiedenen Montagepositionen unterschiedliche Abstände ergeben, die die Anpassung an unterschiedliche Abstände der Funktionselemente zur Fahrzeuglängsmittelebene bzw. zur Achsquermittelebene, oder umgekehrt, gestatten.

Ist als der Achsabstützung zugehöriges Funktionselement beispielsweise ein starrer Federträger, eine Blattfeder oder dergleichen vorgesehen, so lassen sich dadurch bei Anbindung dieses Funktionselementes an der Flanschplatte als achsseitigem Gegenelement Federspuren unterschiedlichen Abstandes zur Fahrzeuglängsmittelebene bilden, so dass achsseitig entsprechend veränderten Aufbaugegebenheiten Rechnung getragen werden kann.

Ist als der Achsabstützung zugehöriges Funktionselement ein rahmenseitig vorgesehener Festanschlag beispielsweise in Form eines Gummipuffers vorgesehen, so kann dieser bei Zuordnung zu einem Längsträger des Fahrzeugrahmens und unterschiedlichen Rahmengestaltungen achsseitig eine entsprechende Anpassung bedingen, und es kann diese durch Querverlagerung des Funktionsteiles erfolgen, indem die Flanschplatte als Halterungsteil mit einer Anschlagfläche als Funktionsteil versehen wird, die durch ihre Positionierung gegenüber dem Achskörper unterschiedliche Abstände zur Achsquermittelebene ermöglicht.

In Abhängigkeit davon, welches Funktionselement der Achsführung und/oder Achsabstützung bezüglich seines achsseitigen Gegenelementes bezogen auf die jeweiligen Konstruktionsgegebenheiten einen Versatz in Fahrzeugquerrichtung verlangt, kann die aufgesetzte Flanschplatte als Bestandteil des Gegenelementes mit ihrem Funktionsteil auf dieses Funktionselement ausgerichtet werden, wobei die aufgesetzte Flanschplatte der Oberseite oder auch der Unterseite der Achse zugeordnet sein kann, und dies in der jeweils erforderlichen Position gegenüber ihrer Verschraubungsebene.

Im Rahmen der Erfindung erweist es sich als zweckmäßig, die eine Flanschplatte form- und/oder materialschlüssig mit dem Achskörper zu verbinden, beispielsweise zu verschweißen, und die aufgesetzte das Funktionsteil tragende Flanschplatte gegenüber dieser zum Achskörper festgelegten Flanschplatte zu verschrauben, wobei bevorzugt die Schraubebene als Befestigungsebene eine zur Achsmittellinie senkrechte Ebene bildet. Anstelle einer Verschraubung mit durch die Schraubachsen bestimmter Befestigungsebene kann die Befestigungsebene auch anderweitig konstruktiv vorgegeben sein, wobei sich eine Lage als zweckmäßig erweist, bei der die Schraubverbindungen zur Befestigungsebene symmetrisch liegen. Die Verschraubung erfolgt zweckmäßigerweise über Schraubbolzen gegen die zum Achskörper festgelegte Gegenflanschplatte, wobei die Schraubbolzen in die Gegenflanschplatte eingeschraubt sind. Hierdurch ergibt sich in vorteilhafter Weise die Möglichkeit, die Gegenflanschplatte als Träger einer Blattfeder, eines Blattfederpaketes oder eines Achsträgers, z.B. für Luftfederelemente auszubilden, wobei diese der Achsführung oder Achsabstützung zugehörigen Teile bevorzugt über Schraubverbindungen gegenüber der Gegenflanschplatte verschraubt werden, die symmetrisch zu der die Schraubebene der Verschraubung zwischen den beiden Flanschplatten liegen.

Insbesondere erweist sich die erfindungsgemäße Lösung als zweckmäßig in Verbindung mit einer Anordnung, bei der die aufgesetzte Flanschplatte das Gegenelement für einen aufbauseitigen Festanschlag als Funktionselement bildet und bei der die Gegenflanschplatte, der Achsunterseite zugeordnet, Träger für eine Blattfeder, Blattfederpaket oder einen Achsträger ist, wobei die diesbezügliche Verschraubung von unten ansetzt bevorzugt über Schraubbolzen erfolgt, denen Sacklochaufnahmen in der Gegenflanschplatte zugeordnet sind, so dass kein Wasser von oben eindringen kann und die Sacklöcher auch keinen Stauraum für Wasser bilden können, was ein Festrosten begünstigen würde.

Weitere Einzelheiten und Merkmale der Erfindung ergeben sich aus den Ansprüchen. Ferner wird die Erfindung nachstehend anhand eines Ausführungsbeispieles erläutert. Es zeigen:
- Figur 1: in schematisierter Darstellung eine Achse für ein Nutzfahrzeug mit Andeutung von der Achsführung dienenden Funktionselementen, sowie solchen die der Achsabstützung dienen, wobei für letztere deren achsseitiges Gegenelement durch eine Flanschplatte gebildet ist,
- Figur 2: eine Draufsicht auf die Darstellung gemäß Figur 1,
- Figur 3: eine der Figur 1 entsprechende Ansicht, wobei die achsseitigen, der Achsabstützung zugeordneten, als Gegenelemente vorgesehenen Flanschplatten in zur Darstellung gemäß Figur 1 um 180° versetzter Lage gezeigt sind,
- Figur 4: eine Draufsicht auf die Darstellung gemäß Figur 3, und
- Figur 5: eine schematisierte Schnittdarstellung in einer teilweise abgesetzten Schnittführung V-V in Figur 2, wobei den dem Achskörper als achsseitige Gegenelemente zugeordneten Flanschplatten der Achsabstützung zugehörige Funktionselemente in Form von Anschlagpuffern gegenüberliegend gezeigt sind.

In den Zeichnungen ist eine Achse für Nutzfahrzeuge in stark schematisierter Darstellung und reduziert auf die für das Verständnis der Erfindung wesentlichen Elemente gezeigt, wobei mit 1 der starre Achskörper bezeichnet ist, der im wesentlichen symmetrisch zu der, bezogen auf das Fahrzeug, mit 2 bezeichneten Längsmittelebene ausgebildet ist. Die Längsmitellinie des Achskörpers 1 ist mit 3 bezeichnet.

Die Achse umfasst der Achsführung und/oder der Achsabstützung zugehörige Funktionselemente, wobei im Ausführungsbeispiel ein der Achsführung dienendes Funktionselement bei 4 und ein der Achsabstützung dienendes Funktionselement bei 5 angedeutet ist. Das Achsführungselement 4 ist beispielsweise ein Längsträger 6, der in nicht gezeigter Weise beabstandet zum Achskörper 1 über Luftfedern am Fahrzeugaufbau gehalten ist; anstelle des Längsträgers 6 kann beispielsweise auch eine Blattfeder das Achsführungselement 4 bilden, wobei diese Blattfeder zusätzlich auch Abstützfunktion übernehmen kann.

Das Achsabstützungselement 5 ist veranschaulicht durch einen am Rahmenträger 7 vorgesehenen Anschlagpuffer 8. Den die Achsführung bzw. die Achsabstützung bildenden Funktionselementen 4 bzw. 5 in Form des Längsträgers 6 bzw. des Anschlagpuffers 8 entsprechen achsseitig Gegenelemente, die insgesamt mit 20 bezeichnet sind und die im Ausführungsbeispiel Flanschplatten 9 bzw. 10 umfassen. Hierbei ist über die Flanschplatte 10 die Verbindung des Längsträgers 6, oder einer an dessen Stelle vorgesehenen Längsblattfeder, mit dem Achskörper 1 veranschaulicht, während die Flanschplatte 9 in dem Anschlagpuffer 8 des Achsabstützungselementes 5 gegenüberliegt.

In Bezug auf die Flanschplatte 9 wird nachstehend die erfindungsgemäße Lösung bezüglich der Lage und Zuordnung zum Achskörper näher erläutert, wobei abweichend vom gezeigten Ausführungsbeispiel entsprechendes auch für die Flanschplatte 10 im Rahmen der Erfindung liegt, so dass gegebenenfalls die Flanschplatten 9 und/oder 10 in erfindungsgemäßer Weise versetzt anzuordnen wären.

In Berücksichtigung des Vorstehenden stellt es keine Einschränkung dar, wenn im Ausführungsbeispiel die der Unterseite des Achskörpers 1 zugehörige und die Führung für den Längsträger 6 bildende. Flanschplatte 10 form- und/oder materialschlüssig mit dem Achskörper 1 verbunden wird, beispielsweise durch verschweißen, und lediglich die gegenüberliegende, im Ausführungsbeispiel der Oberseite des Achskörpers zugeordnete Flanschplatte 9 auf den Achskörper 1 aufgesetzt und gegenüber dieser in erfindungsgemäßer Weise verlagerbar ist.

Die dem Funktionselement 5 zugeordnete Flanschplatte 9 ist über eine Schraubverbindung mit der im Ausführungsbeispiel der Einfachheit halber dem Achskörper 1 fest zugeordneten Flanschplatte 10 verbunden. Die Schraubverbindung ist mit 12 bezeichnet und sie wird im Ausführungsbeispiel über 2 Schraubbolzen 13 hergestellt, welche die Flanschplatte 9 ausgehend von der vom Achskörper 1 abgewandten Seite durchsetzen und in entsprechende Aufnahmebohrung in der Flanschplatte 10 eingeschraubt sind.

Hierzu wird auf Figur 5 verwiesen, die in stark schematisierter Darstellung den Rahmenträger 7 und den an diesem vorgesehenen, ein Funktionselement bildenden elastischen Anschlagpuffer 8 zeigt. Dem Anschlagpuffer 8 ist gegenüberliegend als Funktionsteil ein Anschlag 11 zugeordnet, der an der Flanschplatte 9 vorgesehen ist, die als Bestandteil des Gegenelementes ein Halterungsteil bildet.

Die Schraubverbindung 12, die im Ausführungsbeispiel die Befestigungsebene 21 bestimmt, wird durch die Schraubbolzen 13 veranschaulicht, von denen zwei in einer zur Längsmittelebene 2 des Fahrzeugs, bzw. zur Quermittelebene der Achse parallelen Ebene als Befestigungsebene 21 liegend vorgesehen sind. Die Schraubbolzen 13 übergreifen den Achskörper 1 auf gegenüberliegenden Seiten und greifen in Aufnahmebohrungen 14 der Flanschplatte 10 ein.

Die Flanschplatte 10 ist im dargestellten Ausführungsbeispiel form- oder materialschlüssig, beispielsweise durch Schweißen, mit dem Achskörper 1 verbunden und bildet ihrerseits die Befestigung für einen Längsträger 6, wobei der Längsträger von unten gegen die Flanschplatte 10 verschraubt ist und diese insgesamt mit 15 bezeichnete Befestigungsverschraubung durch vier Schraubbolzen 16 gebildet ist, die den Längsträger 6 durchsetzend in nach unten offene Sacklochbohrungen 17 der Flanschplatte 10 eingeschraubt sind. Die vier Schraubbolzen 16 der Verschraubung des Längsträgers 6 sind den Eckpunkten der Flanschplatte 10 zugeordnet und liegen paarweise einander gegenüber seitlich zum Achskörper 1, wobei bevorzugt die Schraubbolzen 13 der Schraubverbindung 12, die die Befestigungsebenen 21 bestimmen, jeweils etwa mittig zwischen zwei Schraubbolzen 16 in die Flanschplatte 10 eingreifen.

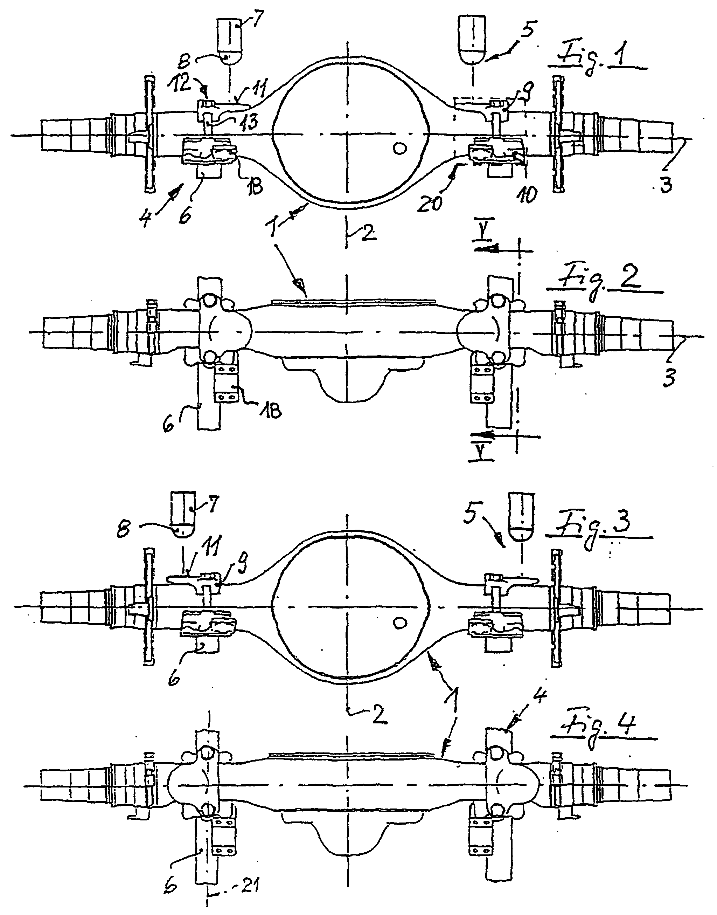

Bezogen auf die Befestigungsebene 21 kann, einer ersten erfindungsgemäßen Ausgestaltung zufolge, die Flanschplatte 9 - entsprechende Form des Achskörpers vorausgesetzt - um 180° versetzt angeordnet werden, wie der Vergleich der Figuren 1, 2 und 3, 4 zeigt. Diese um 180° versetzte Anordnung der Flanschplatte 9 auf dem Achskörper 1 in Verbindung mit der zur Befestigungsebene 21 unsymmetrischen Ausbildung der Flanschplatte 9 mit zur Befestigungsebene 21 nach einer Seite versetztem Anschlag 11 als dem Anschlagpuffer 8 gegenüberliegendem Funktionsteil macht es möglich, dass der Anschlag 11 bei gleicher Lage der Befestigungsebene 21 zum Achskörper in zwei längs der Längsmittellinie 3 des Achskörper versetzten Lagen, und damit in unterschiedlichem Abstand zur Achsquermittelebene zu positionieren ist. Hierdurch kann bei ansonsten unverändertem Aufbau der Achse eine Abstimmung auf in Querrichtung des Fahrzeuges in verschiedenem Abstand zueinander liegende Festanschläge, wie der Anschlagpuffer 8 erfolgen, d.h. bei Zuordnung dieser Anschlagpuffer 8 zu Rahmenlängsträgern 7 eine Anpassung an verschiedene Rahmenstrukturen vorgenommen werden.

Entsprechendes ist, wie bereits angedeutet, abweichend zum gezeigten Ausführungsbeispiel auch für die Flanschplatte 10 möglich, so dass in Anwendung der erfindungsgemäßen Lehre vielfältige Anpassungsmöglichkeiten gegeben sind.

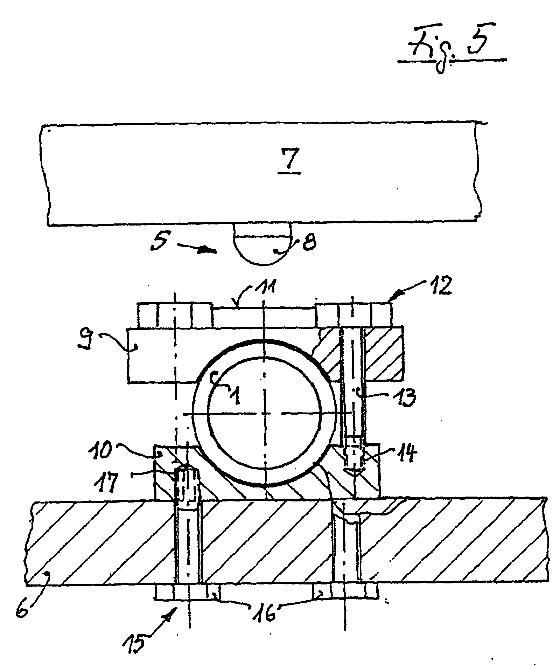

Eine weitere erfindungsgemäße Möglichkeit besteht darin, die Flanschplatte 9 unter Beibehalt ihrer Ausrichtung zum Achskörper 1, also bezüglich der Lage ihres das Funktionsteil bildenden Anschlages 11 zur Befestigungsebene 21 in Richtung der Achslängsmittelebene, auf bezogen auf die Achsquermittelebene 2 verschiedenen Seiten zu positionieren, derart, dass sich ausgehend von einer Lage des Anschlages 11 zwischen Befestigungsebene und Achsquermittelebene auf der einen Achsseite - bezogen auf die Figuren 1 und 2 beispielsweise der linken Achsseite - auf der anderen Achsseite eine Lage des Anschlages 11 auf der zur Achsquermittelebene 2 abgelegenen Seite der Befestigungsebene 21 ergibt, wie dies in den Figuren 3 und 4 auf der rechten Seite dargestellt ist. Durch ein solches Versetzen über Kreuz und/oder durch die Umsetzung durch um 180° versetzte Anordnung unter Beibehalt der jeweiligen Achsseite ergeben sich in Verbindung mit entsprechend umsetzbaren Flanschplatten vielfältige Möglichkeiten der Lageanpassung, entsprechende Querschnitts- und/oder Formgegebenheiten des Achskörpers 1 und/oder der Flanschplatte 9 jeweils vorausgesetzt.

Insbesondere in Verbindung mit in Blechbauweise hergestellten Achskörpern erweist es sich als zweckmäßig, die eine Flanschplatte materialschlüssig, beispielsweise durch Verschweißen mit dem Achskörper zu verbinden. Im Rahmen der Erfindung liegt es jedoch auch, für eine der Flanschplatten eine bezogen auf die Längsmittellinie 3 längs- und/oder drehsichere formschlüssige Fixierung gegenüber dem Achskörper vorzunehmen.

Insbesondere die Figuren 2 und 4 zeigen, dass in vorteilhafter Weise mit der zum Achskörper 1 form- oder materialschlüssig festgelegten Flanschplatte 10 auch die Halterung für einen Querstabilisator verbunden sein kann, die hier mit 18 bezeichnet ist.

## Patentansprüche

1. Achse für Fahrzeuge, insbesondere Nutzfahrzeuge, mit der Achsführung und/oder Achsabstützung zugehörigen Funktionselementen (4, 5) und diesen zugeordneten, beiderseits der Achsquermittelebene (2) liegenden Gegenelementen (20), die bei zur Achsquermittelebene (2) im Abstand konstruktiv vorgegebener Befestigungsebene (21) jeweils lösbar mit dem Achskörper (1) verbundene Halterungsteile (9) umfassen, die jeweils ein einem Funktionselement (5) lagemäßig zugeordnetes, zur Befestigungsebene (21) des Halterungsteiles (9) versetzt liegendes Funktionsteil aufweisen,
**dadurch gekennzeichnet,**
**dass** durch Anordnung der Halterungsteile (9) gegenüber dem Achskörper (1) wahlweise mit Versatz der Funktionsteile (11) in Richtung auf die Achsquermittelebene (2) oder entgegengesetzt hierzu die Funktionsteile (11) mit unterschiedlichem Abstand zur Achsquermittelebene (2) positioniert sind.

2. Achse nach Anspruch 1,
**dadurch gekennzeichnet,**
**dass** die Halterungsteile als gegen den Achskörper (1) verspannbare Flanschplatten (9) ausgebildet sind.

3. Achse nach Anspruch 2,
**dadurch gekennzeichnet,**
**dass** die Flanschplatten (9) gegen den Achskörper (1) durch Schraubverbindungen (12) verspannt sind, die die Befestigungsebene (21) bestimmen.

4. Achse nach Anspruch 3,
**dadurch gekennzeichnet,**
**dass** die jeweilige Befestigungsebene (21) durch die Achsen der Schraubverbindungen (12) bestimmt ist.

5. Achse nach einem der vorhergehenden Ansprüche,
**dadurch gekennzeichnet,**
**dass** die Flanschplatten (9) in in Bezug auf die Befestigungsebene (21) um 180° zu einander versetzten Lagen gegenüber dem Achskörper (1) zu befestigen sind.

6. Achse nach einem der Ansprüche 1 bis 4,
**dadurch gekennzeichnet,**
**dass** die einander in Bezug auf die Achsquermittelebene (2) gegenüberliegenden Flanschplatten (9) unter Beibehalt ihrer Ausrichtung zum Achskörper (1) derart zwischen den einander gegenüberliegenden Achsseiten des Achskörpers (1) umsetzbar sind, dass sich ausgehend von einer Lage ihres jeweiligen Funktionsteiles (11) zwischen der Befestigungsebene (21) und der Achsquermittelebene (2) auf der einen Achsseite auf der anderen Achsseite eine Lage des Funktiontsteiles (Anschlag 11) auf der von der Achsquermittelebene (2) abgelegenen Seite der Befestigungsebene (21) ergibt.

7. Achse nach einem der vorhergehenden Ansprüche,
**dadurch gekennzeichnet,**
**dass** der Funktionsteil der Flanschplatte (9) ein den Federweg des Achskörpers (1) gegen den Aufbau begrenzender Anschlag (11) ist.

8. Achse nach einem der Ansprüche 1 bis 6,
**dadurch gekennzeichnet,**
**dass** der Funktionsteil der Flanschplatte (10) als Aufspannteil für ein Achsabstütz- und/oder Achsführungselement ausgebildet ist.

9. Achse nach Anspruch 8,
**dadurch gekennzeichnet,**
**dass** als Achsabstütz- und/oder Achsführungselement eine Blattfeder vorgesehen ist.

10. Achse nach Anspruch 8,
**dadurch gekennzeichnet,**
**dass** als Achsabstütz- und/oder Achsführungselement ein Federträger (6) vorgesehen ist.

11. Achse nach einem der vorhergehenden Ansprüche,
**dadurch gekennzeichnet,**
**dass** der einen Anschlag (11) als Funktionsteil bildenden Flanschplatte (9) als Spannpartner zum Achskörper (1) gegenüberliegend eine Flanschplatte (10) vorgesehen ist, die mit dem Achskörper (1) unlösbar verbunden ist.

12. Achse nach einem der Ansprüche 1 bis 10,
**dadurch gekennzeichnet,**
**dass** der einen Anschlag (11) als Funktionsteil umfassenden Flanschplatte (9) als Spannpartner zum Achskörper (1) gegenüberliegend eine Flanschplatte (10) vorgesehen ist, die mit dem Achskörper (1) lösbar verbunden ist.

13. Achse nach einem der vorhergehenden Ansprüche,
**dadurch gekennzeichnet,**
**dass** die durch die Schraubverbindung (12) zwischen den Flanschplatten (9, 10) bestimmte Befestigungsebene (21) die Symmetrieebene einer Befestigungsverschraubung (15) der Achsführung und/oder Achsabstützung zum Achskörper (1) bildet.

14. Achse nach Anspruch 13,
**dadurch gekennzeichnet,**
**dass** die wechselseitigen Verschraubungen (12, 15) von gegenüberliegenden Seiten des Achskörpers (1) ausgehen.

15. Achse nach Anspruch 14,
**dadurch gekennzeichnet,**
**dass** als Schraubelemente für die Verschraubungen (12, 15) Schraubbolzen (13, 16) vorgesehen sind.

16. Achse nach Anspruch 15,
**dadurch gekennzeichnet,**
**dass** die Schraubbolzen (16) der unterseitig zum Achskörper (1) liegenden Befestigungsverschraubung (15) der Achstrag und/oder Achsführung in Sacklochbohrungen (17) der zugehörigen Flanschplatte (10) eingeschraubt sind.

## Claims

1. Axle for vehicles, in particular commercial vehicles, with functional elements (4, 5) associated with the axle guide and/or axle support and with counter-elements (20) located on both sides of the transverse central plane (2) of the axle assigned thereto and comprising, with a mounting plane (21) structurally preset regarding the distance from the transverse central plane (2) of the axle, mounting parts (9) detachably connected to the axle housing (1), each incorporating a functional part positionally assigned to a functional element (5) and being offset relative to the mounting plane (21) of the mounting part (9),
**characterised in that**
the functional parts (11) are positioned at varying distances from the transverse central plane (2) of the axle by optionally arranging the mounting parts (9) relative to the axle housing (1) with the functional parts (11) offset either towards the transverse central plane (2) of the axle or in the opposite direction.

2. Axle according to claim 1,
**characterised in that**
the mounting parts are designed as flange plates (9) which can be clamped against the axle housing (1).

3. Axle according to claim 2,
**characterised in that**
the flange plates (9) are clamped against the axle housing (1) by means of screw connections (12) determining the mounting plane (21).

4. Axle according to claim 3,
**characterised in that**
each mounting plane (21) is determined by the axes of the screw connections (12).

5. Axle according to any of the preceding claims,
**characterised in that**
the flange plates (9) are to be attached in positions relative to the axle housing (1) which are mutually offset by 180° with reference to the mounting plane (21).

6. Axle according to any of claims 1 to 4,
**characterised in that**
the flange plates (9) lying opposite one another with reference to the transverse central plane (2) of the axle can, while maintaining their orientation relative to the axle housing (1), be transferred between opposite sides of the axle housing (1), so that, starting from a position of their functional part (11) between the mounting plane (21) and the transverse central plane (2) of the axle on one side of the axle, the functional part (11) is positioned on that side of the mounting plane (21) which is remote from the transverse central plane (2) of the axle on the other side of the axle.

7. Axle according to any of the preceding claims,
**characterised in that**
the functional part of the flange plate (9) is a stop (11) limiting the suspension travel of the axle housing (1) relative to the body.

8. Axle according to any of claims 1 to 6,
**characterised in that**
the functional part of the flange plate (10) is designed as a clamping part for the axle support and/or the axle guide element.

9. Axle according to claim 8,
**characterised in that**
a leaf spring is provided as axle support and/or the axle guide element.

10. Axle according to claim 8,
**characterised in that**
a spring bracket (6) is provided as axle support and/or the axle guide element.

11. Axle according to any of the preceding claims,
**characterised in that**
opposite the flange plate (9) forming a stop (11) as a functional part, a flange plate (10) permanently connected to the axle housing (1) is provided as a clamping partner for the axle housing (1).

12. Axle according to any of claims 1 to 10,
**characterised in that**
opposite the flange plate (9) incorporating a stop (11) as a functional part, a flange plate (10) detachably connected to the axle housing (1) is provided as a clamping partner for the axle housing (1).

13. Axle according to any of the preceding claims,
**characterised in that**
the mounting plane (21) determined by the screw connection (12) between the flange plates (9, 10) represents the plane of symmetry of a threaded connection (15) between the axle guide and/or axle support and the axle housing (1).

14. Axle according to claim 13,
**characterised in that**
the mutual connections (12, 15) are established from opposite sides of the axle housing (1).

15. Axle according to claim 14
**characterised in that**
studs ( 13, 16) are provided as threaded elements for the connections (12, 15).

16. Axle according to claim 15
**characterised in that**
the studs (16) of the threaded connection (15) of the axle support and/or axle guide, which is located on the underside of the axle housing (1), are tightened into blind holes (17) of the associated flange plate (10).

## Revendications

1. Essieu pour véhicules, en particulier pour véhicules utilitaires, avec des éléments fonctionnels (4, 5) appartenant au guidage d'essieu et/ou au support d'essieu, et des éléments antagonistes (20) affectés à ces derniers, se trouvant des deux côtés du plan médian transversal de l'essieu (2), éléments qui, pour un plan de fixation (21) défini par conception à distance par rapport au plan médian transversal de l'essieu (2), comprennent des pièces de fixation (9) reliées chacune de manière démontable au corps d'essieu (1), qui comprennent chacune une partie fonctionnelle, affectée en position à un élément fonctionnel (5), se trouvant décalée par rapport au plan de fixation (21) de la pièce de fixation (9), **caractérisé en ce que** par la disposition des pièces de fixation (9) par rapport au corps d' essieu (1), au choix avec décalage des pièces fonctionnelles (11) en direction du plan médian transversal de l'essieu (2) ou dans la direction opposée, les pièces fonctionnelles (11) sont positionnées avec une distance différente par rapport au plan médian transversal de l'essieu (2).

2. Essieu selon la revendication 1, **caractérisé en ce que** les pièces de fixation sont configurées comme des plaques à bride (9) pouvant être serrées contre le corps d'essieu (1).

3. Essieu selon la revendication 2, **caractérisé en ce que** les plaques à bride (9) sont serrées contre le corps d'essieu (1) par des liaisons à vis (12) qui déterminent le plan de fixation (21).

4. Essieu selon la revendication 3, **caractérisé en ce que** le plan de fixation (21) respectif est déterminé par les axes des liaisons à vis (12).

5. Essieu selon l'une quelconque des revendications précédentes, **caractérisé en ce que** les plaques à bride (9) doivent être fixées par rapport au corps d'essieu (1) dans des positions décalées de 180° l'une de l'autre par rapport au plan de fixation (21).

6. Essieu selon l'une quelconque des revendications 1 à 4, **caractérisé en ce que** les plaques à bride (9) disposées l'une en face de l'autre par rapport au plan médian transversal de l'essieu (2), moyennant conservation de leur orientation par rapport au corps d'essieu (1), peuvent être permutées de telle façon entre les côtés de l'essieu se trouvant l'un en face de l'autre que, partant d'une position de leur partie fonctionnelle (11) respective d'un des côtés de l'essieu entre le plan de fixation (21) et le plan médian transversal de l'essieu (2), il en résulte de l'autre côté de l'essieu une position de la partie fonctionnelle (butée 11) du côté du plan de fixation (21) détourné du plan médian transversal de l'essieu (2).

7. Essieu selon l'une quelconque des revendications précédentes, **caractérisé en ce que** la partie fonctionnelle de la plaque à bride (9) est une butée (11) qui limite la course du ressort du corps d'essieu (1) par rapport à la carrosserie.

8. Essieu selon l'une quelconque des revendications 1 à 6, **caractérisé en ce que** la partie fonctionnelle de la plaque à bride (10) est configurée comme partie de serrage pour un élément de support de l'essieu ou pour un élément de guidage de l'essieu.

9. Essieu selon la revendication 8, **caractérisé en ce qu'**un ressort à lame est prévu comme élément support de l'essieu et/ou comme élément de guidage de l'essieu.

10. Essieu selon la revendication 8, **caractérisé en ce qu'**un support de ressort (6) est prévu comme élément support de l'essieu et/ou comme élément de guidage de l'essieu.

11. Essieu selon l'une quelconque des revendications précédentes, **caractérisé en ce qu'**une plaque à bride (10), qui est solidaire du corps d' essieu (1), est prévue comme partenaire de serrage par rapport au corps d' essieu (1) en face de la plaque à bride (9) formant une butée (11) comme partie fonctionnelle.

12. Essieu selon l'une quelconque des revendications 1 à 10, **caractérisé en ce qu'**une plaque à bride (10), qui est reliée au corps d' essieu (1) de façon démontable, est prévue comme partenaire de serrage par rapport au corps d'essieu (1) en face de la plaque à bride (9) comprenant une butée (11) comme partie fonctionnelle.

13. Essieu selon l'une quelconque des revendications précédentes, **caractérisé en ce que** le plan de fixation (21) déterminé par la liaison à vis (12) entre les plaques à bride (9, 10) forme le plan de symétrie d'un vissage de fixation (15) du guidage d'essieu et/ou du support d'essieu au corps d'essieu (1).

14. Essieu selon la revendication 13, **caractérisé en ce que** les assemblages vissés alternés (12, 15) partent de côtés opposés du corps d'essieu (1).

15. Essieu selon la revendication 14, **caractérisé en ce que** des boulons filetés (13, 16) sont prévus comme éléments à visser pour les assemblages vissés (12, 15).

16. Essieu selon la revendication 15, **caractérisé en ce que** les boulons filetés (16) du vissage de fixation (15) du support d'essieu ou du guidage d'essieu, se trouvant à la face inférieure du corps d'essieu (1), sont vissés dans des trous borgnes (17) de la plaques à bride (10) correspondante.
